# EUROPEAN PATENT SPECIFICATION

(11) **EP 0 601 821 B1**
(45) Date of publication and mention of the grant of the patent: **11.06.1997**
(21) Application number: 93309778.4
(22) Date of filing: 06.12.1993
(51) Int. Cl.: F16J 15/34

(54) **Non-contacting shaft sealing device**
Kontaktlose Wellendichtung
Joint d'axe sans contact

(30) Priority: 11.12.1992 JP 331828/92; 22.07.1993 JP 181059/93
(43) Date of publication of application: 15.06.1994
(73) Proprietor: NIPPON PILLAR PACKING CO., LTD., Osaka-shi, Osaka 532 (JP)
(72) Inventor: Fuse, Toshihiko, c/o NIPPON PILLAR PACKING CO. LTD, Sanda-shi, Hyogo-Kent (JP); Okumachi, Eiji, c/o NIPPON PILLAR PACKING CO. LTD, Sanda-shi, Hyogo-Kent (JP)
(74) Representative: Daley, Michael John

(56) References cited:
- EP-A- 0 469 379
- EP-A- 0 499 370
- FR-A- 2 331 416
- GB-A- 2 197 396

## Description

The present invention relates to a non-contacting shaft sealing device used in rotary machines such as compressor, turbine and blower, and more specifically to a non-contacting shaft sealing device constructed so that a sealing end face of seal case side and a sealing end face of rotary shaft side may rotate relatively in non-contacting state with an interposing fluid film of a fluid to be sealed at high pressure side.

### BACKGROUND OF THE INVENTION

A non-contacting shaft sealing device of this kind, hitherto, is generally constructed as shown in Fig. 17, in which dynamic pressure generating grooves b··· are formed parallel on a sealing end face a of rotary shaft side helically in its peripheral direction in order to generate a dynamic pressure (positive pressure) between the sealing end face a and the sealing end face of the seal case side at time of relative rotation of the both sealing end faces so that the generated pressure, the back pressure due to the fluid to be sealed acting on the sealing end face of seal case side, and the spring force pressing this sealing end face to the sealing end face a of rotary shaft side may be balanced, and the both sealing end faces are held in non-contacting state with a fluid film interposing therebetween.

By such helical dynamic pressure generating grooves b···, however, dynamic pressure is generated only when the rotary shaft or the sealing end face a is rotated in normal direction (direction A), but dynamic pressure is not generated between the both sealing end faces when rotated in reverse direction (anti-direction A). It could not be therefore applied in rotary machines that need to rotate the rotary shaft in both normal and reverse directions.

Besides, although plural dynamic pressure generating regions are arranged parallel in the peripheral direction, only one dynamic pressure generating groove b is present in each dynamic pressure generating region, that is, there is only one dynamic pressure generating spot in each dynamic pressure generating region. Hence, if the generated dynamic pressure decreases due to dust or dirt contained in the fluid to be sealed invading and depositing in part of the dynamic pressure generating grooves b··· , the dynamic pressure generated in the entire dynamic pressure generating region including such clogged dynamic pressure generating groove b decreases. In such a case, therefore, the shaft sealing function may be lowered or fail.

### BRIEF DESCRIPTION OF THE INVENTION

It is hence a primary object of the invention to present a non-contacting shaft sealing device capable of generating a sufficient dynamic pressure between both sealing end faces for keeping them in non-contacting state whether the relative rotating direction of the both sealing end faces i.e. whether the rotating direction of the rotary shaft is normal direction or reverse direction, and also caparable of exhibiting a favorable sealing function not only in a machine for rotating the rotary shaft always in one direction, but also in a machine for rotating in both normal and reverse directions.

It is another object of the invention to present a non-contacting shaft sealing device which generates the dynamic pressure under the same conditions regardless of the rotating direction of the rotary shaft, and which is equal in the shaft sealing function whether in normal rotation or in reverse rotation.

It is another object of the invention to present a non-contacting shaft sealing device capable of possessing extremely many dynamic pressure generating grooves i.e. dynamic pressure generating spots on the sealing end face by forming dynamic pressure generating grooves in linear shape occupying an extremely small area, and further capable of easily and securely obtaining a generated dynamic pressure sufficient for keeping the both sealing end faces in an appropriate non-contacting state.

It is a further object of the invention to present a non-contacting shaft sealing device capable of maintaining and keeping always a favorable shaft sealing state, without release of pressure from dynamic pressure generating grooves if the radial configuration of both sealing end face is changed, and having a large restoring strength if the sealing end face is inclined, by forming multiple independent dynamic pressure generating grooves parallel in the peripheral direction of the sealing end face.

It is a further object of the invention to present a non-contacting shaft sealing device which generates dynamic pressure under the same conditions regardless of rotating direction of rotary shaft, and which is equal in shaft sealing function whether in normal rotation or in reverse rotation, by forming dynamic pressure generating grooves adjacent in the direction of periphery of sealing end face symmetrically around the diametral line of sealing end face.

It is still another object of the invention to present a non-contacting shaft sealing device which, by forming multiple independent dynamic pressure generating grooves arranged in the peripheral direction and radial direction, does not become extremely uneven in the peripheral direction in regard to pressure distribution of dynamic pressure generated, on the whole, and can prevent the lowered or abnormal shaft sealing function due to poor pressure distribution, even if the generated dynamic pressure is partly decreased due to invasion or deposit of dust or dirt contained in the fluid to be sealed in part of the dynamic pressure generating grooves.

EP-A-0 499 370 discloses non-contacting shaft sealing devices according to the features of the first portions of independent claims 1 and 12, in which devices sealing end faces have grooved areas of a configuration such that dynamic pressure is produced when a shaft is rotated in either sense. Further, more than one portion in each grooved area is provided for the generation of dynamic pressure for each direction of shaft rotation. However, no preferred groove ratios are disclosed.

According to the present invention there is provided a non-contacting shaft sealing device so constructed that a sealing end face of a seal case side and a sealing end face of a rotary shaft side may rotate relatively in a non-contacting state with a fluid film of high pressure side fluid to be sealed interposing therebetween, wherein an even number of dynamic pressure generating groove groups are arranged in the peripheral direction on one sealing end face, each dynamic pressure generating groove group having plural approximately L-shaped linear dynamic pressure generating grooves each composed of a fluid lead-in part extending in the radial direction from the peripheral edge of said high pressure side of said sealing end face and a dynamic pressuring generating part extending in the peripheral direction from the end portion of said fluid lead-in part with said dynamic pressure generating grooves not crossing each other and being arranged in the radial direction, and adjacent dynamic pressure generating groove groups being symmetrical in the peripheral direction,
characterised in that, the groove ratio in each dynamic pressure generating groove group is 0.1 to 0.9, said groove ratio being the ratio of the radial width of said dynamic pressure generating groove group to the radial width of an annular face where both sealing end faces overlap.

When the seaiing end face in which the dynamic pressure generating grooves are formed (hereinafter called the grooved sealing end face) is rotated relatively, the fluid to be sealed at high pressure side is led into the dynamic pressure generating grooves from the fluid lead-in parts, and a dynamic pressure (positive pressure) is generated in the terminal end part of the dynamic pressure generating parts extending in the rotating direction (the relative rotating direction with the opposite sealing end face) of the grooved sealing end face from the fluid lead-in parts, and the both sealing end faces are held in a non-contacting state with an interposed fluid film of the fluid to be sealed at the high pressure side.

Incidentally, since even-number sets of dynamic pressure generating groove groups are arranged in the peripheral direction and adjacent dynamic pressure generating groove groups are symmetrical in the peripheral direction, all dynamic pressure generating grooves are divided into one type of dynamic pressure generating groove groups (hereinafter called first dynamic pressure generating grooves) possessing dynamic pressure generating parts extending in a specific rotating direction (hereinafter called the normal rotating direction) of the grooved sealing end face from the fluid lead-in parts, and another type of dynamic pressure generating groove groups (hereinafter called second dynamic pressure generating grooves) possessing dynamic pressure generating parts extending in the opposite direction (hereinafter called the reverse rotating direction) of the normal rotating direction from the fluid lead-in parts. The forms (the number, shape, length and configuration of fluid lead-in parts and dynamic pressure generating parts) of dynamic pressure generating grooves of both types are exactly the same.

Therefore, when the grooved sealing end face which is the sealing end face where dynamic pressure generating groove groups are formed, is relatively rotated in the normal rotating direction, a dynamic pressure is generated in the terminal end part of the dynamic pressure generating part of each first dynamic pressure generating groove, while when the grooved sealing end face is relatively rotated in the reverse rotating direction, a dynamic pressure is generated in the terminal end part of the dynamic pressure generating part of each second dynamic pressure generating groove, and, as mentioned above, since the first dynamic pressure generating grooves and the second dynamic pressure generating grooves are identical in number, shape, etc., the dynamic pressure is generated in the same conditions whether the relative rotation of the both sealing end face is in normal direction or in reverse direction. That is, whether the rotary shaft is rotated in normal direction or reverse direction, an appropriate dynamic pressure can be generated between the both sealing end faces in the same conditions, so that a favorable shaft sealing function may be exhibited.

Moreover, since the dynamic pressure generating grooves are in the linear shape occupying a very small area, the number of dynamic pressure generating grooves (especially the number of dynamic pressure generating parts arraned in a row in the radial direction) in each of dynamic pressure generating groove groups arranged in the peripheral direction can be extremely increased. Therefore, if dust or dirt contained in the fluid to be sealed invades and deposits in part of the dynamic pressure generating groove to decrease the dynamic pressure generated in the dynamic pressure generating groove, since the dynamic pressure generating grooves are independent, the pressure distribution of dynamic pressure generated in the peripheral direction does not become extremely nonuniform, and lowering or abnormality of shaft sealing function due to defective distribution of pressure does not occur. That is, since there are many independent dynamic pressure generating parts (that is, dynamic pressure generating parts disposed parallel in the radial direction) in each of the dynamic pressure generating regions arranged in the peripheral direction, in one dynamic pressure generating region, if the dynamic pressure generated in part of the dynamic pressure generating groove is decreased due to invasion and deposit of dust or dirt, there are still many dynamic pressure generating grooves (dynamic pressure generating grooves capable of generating appropriate dynamic pressure) other than such dynamic pressure generating groove with deposit of dirt, and therefore the generated dynamic pressure in the whole dynamic pressure generating region is hardly decreased, so that the pressure distribution in the peripheral direction may not be extremely nonuniform.

According to another aspect of the present invention there is provided a non-contacting shaft sealing device so constructed that a sealing end face of a seal case side and a sealing end face of a rotary shaft side may rotate relatively in a non-contacting state with a fluid film of a high pressure side fluid to be sealed interposing therebetween, wherein plural dynamic pressure generating grooves are formed on one sealing end face and arranged in its peripheral direction, and each dynamic pressure generating groove is a shallow linear groove in a zigzag form possessing two or more turning points and extending in the radial direction from the high pressure side peripheral edge of the sealing end face, characterised in that;
the groove ratio of each dynamic pressure generating groove is 0.1 to 0.9, said groove ratio being the ratio of the radial width of said dynamic pressure generating groove to the radial width of an annular face where both sealing end faces overlap; and
said adjacent dynamic pressure generating grooves are partly overlaid in the peripheral direction without crossing each other.

When both sealing end faces are rotated relatively, a dynamic pressure (positive pressure) is generated at the turning points in each dynamic pressure generating groove, that is, at the turning points at the rotating direction side, and the both sealing end faces are held in non-contacting state. Since each dynamic pressure generating groove is in a zigzag form having two or more turning points, whether the relative rotation of both sealing end faces is in normal direction or in reverse direction, there are always turning points at rotating direction side where dynamic pressure is generated. That is, whether the rotating direction is normal or reverse, a dynamic pressure is generated between the two sealing end faces, so that the both sealing end faces may be held in non-contacting state.

### BRIEF DESCRIPTION OF THE DRAWINGS

Fig. 1 is a cross sectional view showing a non-contacting shaft sealing device according to the invention.

Fig. 2 is a front view showing a sealing end face in which dynamic pressure generating grooves are formed.

Fig. 3 is a magnified detailed view of part of Fig. 2.

Fig. 4 is a partially cut-away front view of a sealing end face showing other embodiment.

Fig. 5 is a front view of a sealing end face showing a different embodiment.

Fig. 6 is a front view of a sealing end face showing a different embodiment.

Fig. 7 is a front view of a sealing end face showing a different embodiment.

Fig. 8 is a front view of a sealing end face showing a different embodiment.

Fig. 9 is a front view of a sealing end face showing a different embodiment.

Fig. 10 is a partially cut-away front view of a sealing end face showing a different embodiment.

Fig. 11 is a front view of a sealing end face showing a different embodiment.

Fig. 12 is a magnified detailed view of part of Fig. 11.

Fig. 13 is a front view of a sealing end face showing a different embodiment.

Fig. 14 is a partially cut-away front view of a sealing end face showing a different embodiment.

Fig. 15 is a partially cut-away front view of a sealing end face showing a different embodiment.

Fig. 16 is a partially cut-away front view of a sealing end face showing a different embodiment.

Fig. 17 is a partially cut-away front view showing a sealing end in a conventional non-contacting shaft sealing device.

### DETAILED DESCRIPTION OF THE INVENTION

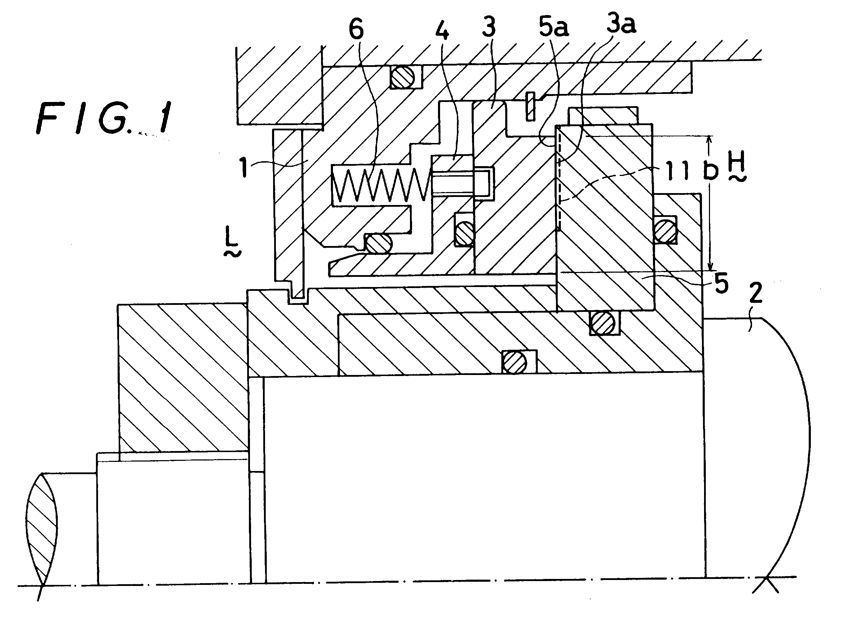

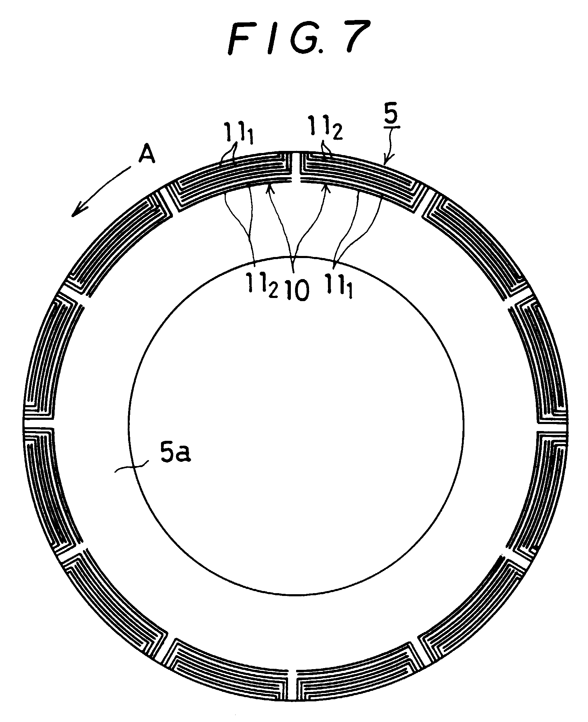

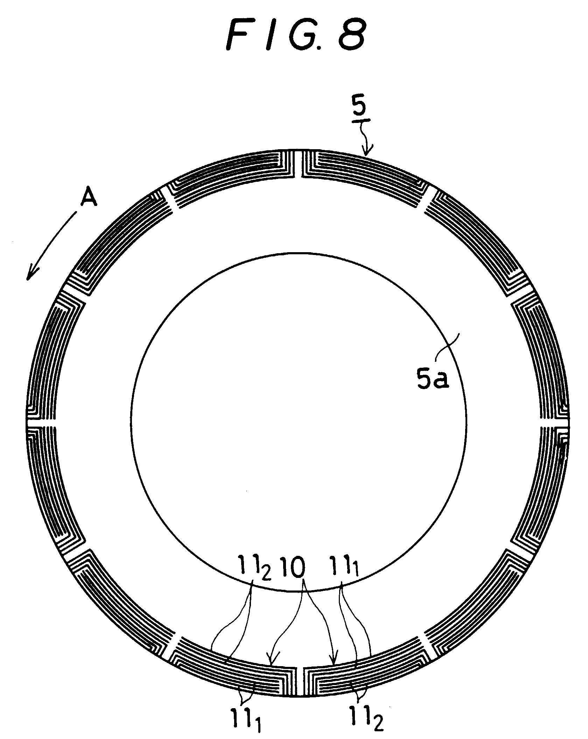

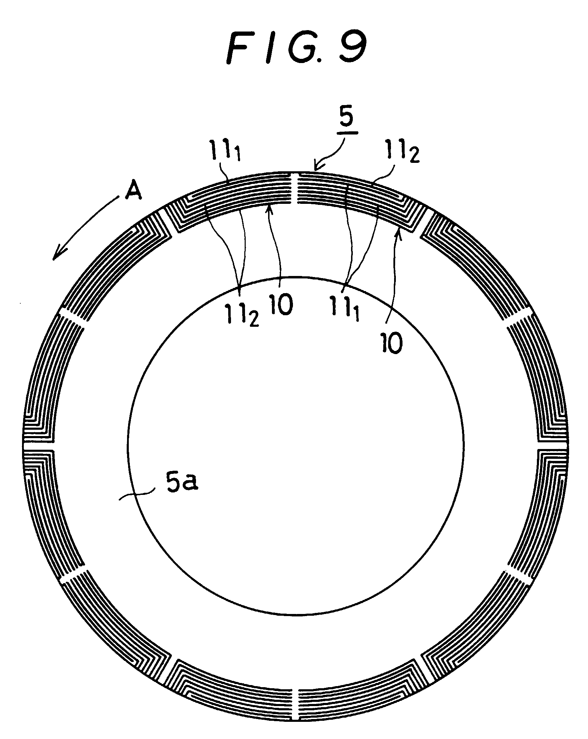

The constitution of the invention is described specifically below by referring to embodiments disclosed in Figs. 1 through 16.

In a non-contacting shaft sealing device shown in Fig. 1, numeral 1 denotes a seal case for partitioning a high pressure side sealed fluid region (for example, high pressure gas region in a machine such as turbine) H, and a low pressure side sealed fluid region (for example, atmospheric region outside the machine such as turbine) L, 2 is a rotary shaft penetrating through the seal case 1, 3 is a stationary sealing ring held in the seal case 1 by a holding ring 4 and slidable in the axial line direction, 5 is a rotary sealing ring fixed on the rotary shaft 2 opposite to the stationary sealing ring 3, and 6 is a spring placed between the seal case 1 and holding ring 4, for pressing and thrusting the stationary seal ring 3 to the rotary seal ring 5. In this embodiment, the stationary sealing ring 3 is composed of soft material such as carbon, and the rotary sealing ring 5 is made of hard material such as WC, SiC, other ceramics, cemented carbide, and other alloys.

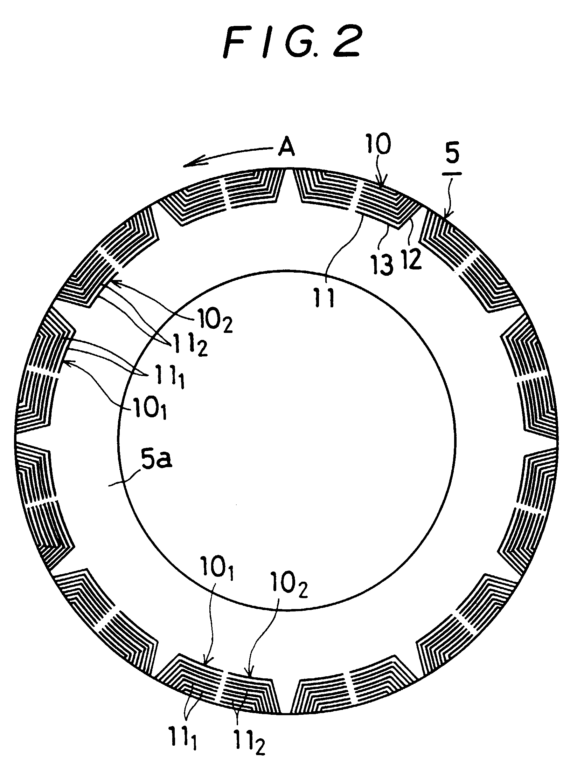

Thus, on the rotary side sealing end face 5a which is the end face of the rotary sealing ring 5, as shown in Figs. 1 and 2 are formed an even-number of dynamic pressure generating groove groups 10··· arranged close to each other at a specific short interval in its peripheral direction. A dynamic pressure is generated between the rotary side sealing end face 5a, and the stationary side sealing end face 3a which is the end face of the confronting stationary sealing ring 3.

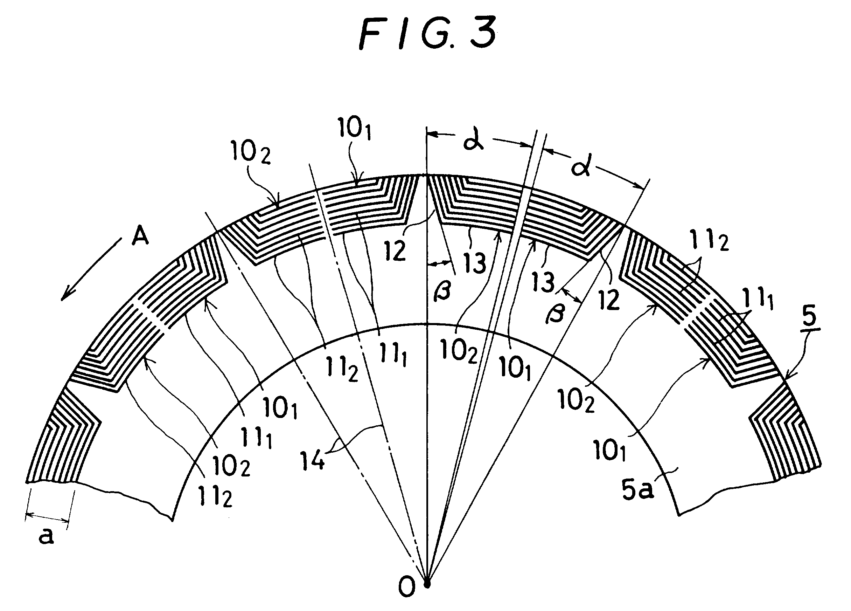

In each dynamic pressure generating groove group 10, as shown in Figs. 2 and 3, plural approximately L-shaped dynamic pressure generating grooves 11··· composed of fluid lead-in parts 12 extending in the radial direction from the outer peripheral edge which is the peripheral edge of high pressure side of the sealing end face 5a, and dynamic pressure generating parts 13 extending in the peripheral direction from the end portion of the fluid lead-in parts 12 are disposed parallel in the radial direction, without crossing each other. Each fluid lead-in part 12 is formed in a linear shape, and each dynamic pressure generating part 13 is in an arc form centered on the center 0 of the sealing end face 5a. Each dynamic pressure generating groove 11 is a shallow linear groove formed by laser processing method, etching processing method, shot blasting processing method, or the like. The depth D and width W of this linear groove are in general, preferably D = 0.1 to 20 µ m, W = 0.001 to 3 mm, and in particular the groove depth in the dynamic pressure generating part 13 is preferably 0.1 to 10 µ m. The number and width of linear grooves 11 of the dynamic pressure generating groove group 10, especially the number and width of dynamic pressure generating parts 13 are set depending on the sealing conditions and others, but they are set such that the groove ratio is 0.1 to 0.9 (preferably 0.11 to 0.6). The groove ratio means, incidentally, the value (a/b) wherein a is the radial width of the dynamic pressure generating groove group 10 or the radial width (see Fig. 3) of the region in which the dynamic pressure generating parts 13··· are formed parallel in the radial direction which b is the seal face width or the radial width (see Fig. 1) of the annular face where both sealing end faces 3a and 5a overlap.

Meanwhile, the adjacent dynamic pressure generating groove groups 10₁ and 10₂ are symmetrical in the peripheral direction as shown in Fig. 3, that is, symmetrical around a boundary line 14 extending in the radial direction. That is, the range α (on the basis of the center 0 of the sealing end face 5a) for forming dynamic pressure generating grooves 11··· in each of dynamic pressure generation groove groups 10₁, 10₂, the peripheral interval between fluid lead-in parts 12···, and the radial interval between dynamic pressure generating parts 13 ··· are respectively equal between groove groups 10₁ and 10₂. One dynamic pressure generating groove group 10₁ is composed only of first dynamic pressure generating grooves 11₁··· having the dynamic pressure generating part 13··· extended from each fluid lead-in part 12 in the normal rotating direction (direction A), whereas the other dynamic pressure generating groove group 10₂ is composed only of second dynamic pressure generating grooves 11₂··· having the dynamic pressure generating parts 13··· extended from each fluid lead-in part 12 in the reverse rotating direction (anti-direction A). The fluid lead-in part 12 in each first dynamic pressure generating groove 11₁ is inclined at a specific angle β in the normal rotating direction with respect to the diametral line, whereas the fluid lead-in part 12 in each second dynamic pressure generating groove 11₂ is inclined at the same specific angle β in the reverse rotating direction with respect to the diametral line.

To exhibit the dynamic pressure generating function sufficiently, it is necessary at least (1) to make the number of dynamic pressure generating grooves 11 as many as possible, and (2) to design the dynamic pressure generating part 13 of sufficient length so as to have a necessary approaching distance for generating dynamic pressure. Therefore, the form of the dynamic pressure generating groove groups 10··· should be properly set depending on the diameter, sealing condition of the sealing end face 5a and others, in consideration of these points (1) and (2) and the groove ratio. For example, the peripheral interval between the fluid lead-in parts 12···, and the radial interval between the dynamic pressure generating parts 13··· should be preferably set as small as possible in consideration of point (1). According to this embodiment, the interval is set at about the groove width W. The inclination angle β of each fluid lead-in part 12 should be generally 0 to 45° , preferably. This is because if β > 45° , the fluid lead-in part 12 becomes long sequentially with the result that either (1) or (2) must be sacrificed, which may lead to decrease of generated dynamic pressure. In this embodiment, β is set at 15° . Also, the range α in the peripheral direction for forming the dynamic pressure generating groove group 10 is also set appropriately in consideration of points (1), (2), and generally α is preferably set at 5 to 30 °, and α = 13° in this embodiment.

In thus composed shaft sealing device, when the rotary shaft 2 is rotated in the normal direction, dynamic pressure is generated in the terminal end portion of each dynamic pressure generating part 13 in the first dynamic pressure generating grooves 11₁··· by the high pressure side sealed fluid introduced into the first dynamic pressure generating grooves 11₁ ··· , and when the rotary shaft 2 is rotated reversely, dynamic pressure is generated in the terminal end portion of each dynamic pressure generating part 13 in the second dynamic pressure generating grooves 11₂ ··· by the high pressure side sealed fluid introduced into the second dynamic pressure generating grooves 11₂··· having the same groove number and shape as the first dynamic pressure generating grooves 11₁··· . Each dynamic pressure generating groove 11 is an independent linear groove occupying a very small area, and extremely many dynamic pressure generating grooves 11₁ ···, 11₂ ··· can be formed on the sealing end face 5a, so that a sufficient dynamic pressure for holding the both sealing end faces 3a, 5a in non-contacting state can be generated. What is more, since the first dynamic pressure generating grooves 11₁··· or second dynamic pressure generating grooves 11₂··· are formed in large numbers independently in the peripheral direction and radial direction, if dust or dirt contained in the fluid to be sealed invades and deposits in part of the dynamic pressure generating grooves 11··· to decrease the dynamic pressure generated in the dynamic pressure generating grooves 11···, on the whole, the pressure distribution of the generated dynamic pressure in the peripheral direction will not be extremely nonuniform. Therefore, whether the rotary shaft 2 is rotated in normal direction or reverse direction, a dynamic pressure is generated between the sealing end faces 3a and 5a under the same conditions. This generated dynamic pressure, the back pressure acting on the stationary sealing ring 3 i.e. the pressure of the high pressure side sealed fluid acting on the back side of the holding ring 4 and the thrusting force by the spring 6 are balanced, and the both sealing end faces 3a and 5a are held in non-contacting state by an interposing fluid film of the fluid to be sealed at the high pressure side. At the area where the fluid film is formed, the high pressure side sealed fluid region H and low pressure side sealed fluid region L are separted and sealed.

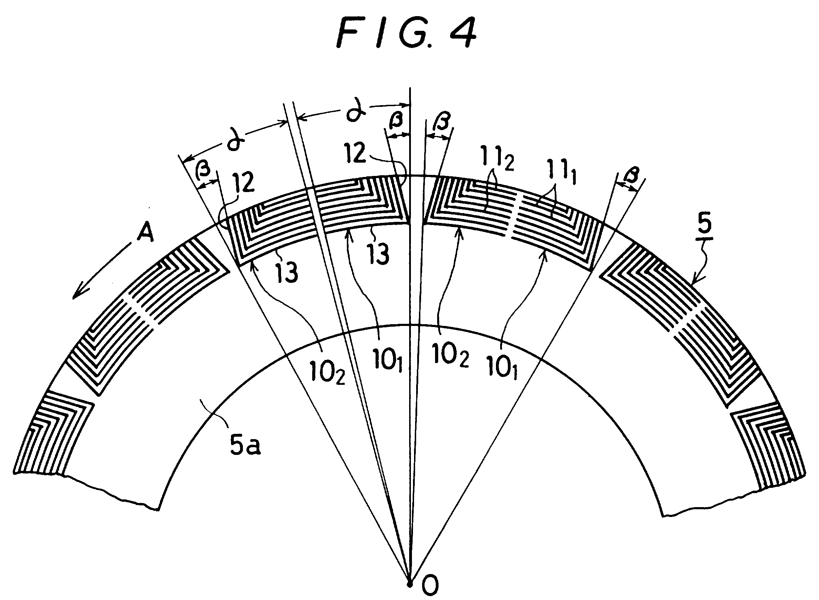

The invention is not limited to the above mentioned embodiment alone, but may be properly changed or modified as far as not departing from the true spirit and principle of the invention, and in particular the number and shape of the dynamic pressure generating groove group 10 are arbitrary, which may be changed, for example, as shown in Figs. 4 to 10.

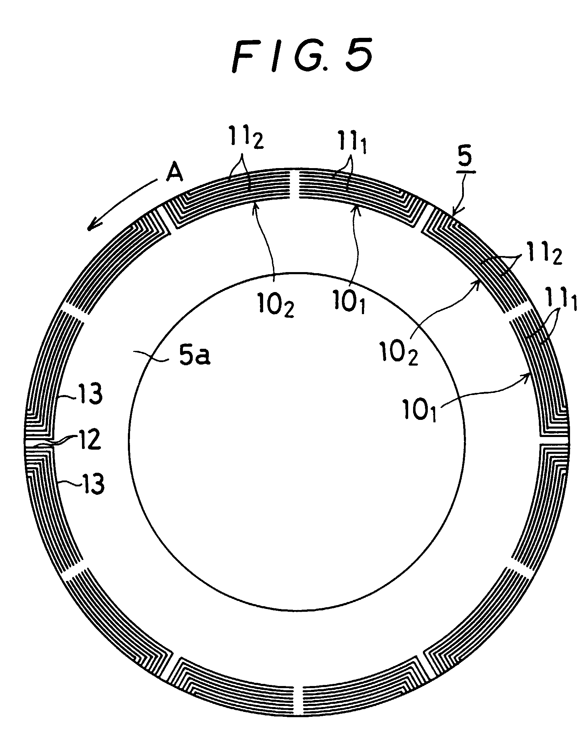

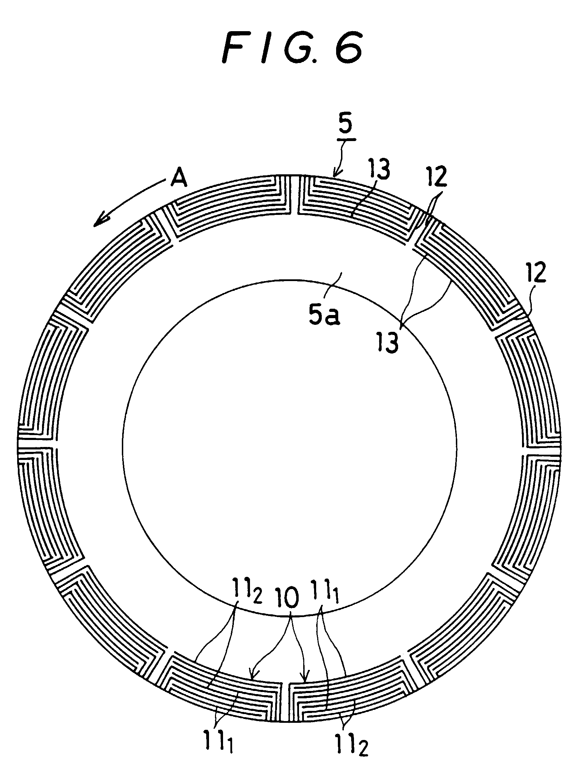

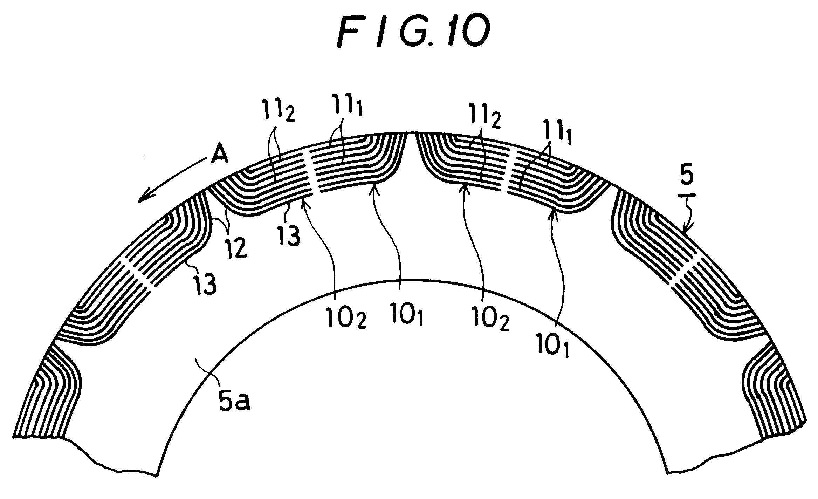

As shown in Fig. 4, specifically, the inclination direction of each fluid lead-in part 12 with respect to the diametral line is opposite to that of the above mentioned embodiment. In this case, the inclination angle β (45° or less) can be also set freely. In Fig. 5, this inclination angle β is 0°. In Figs. 6 to 9, in each dynamic pressure generating groove group 10, first dynamic pressure generating grooves 11₁··· possessing dynamic pressure generating parts 13 extending in normal rotating direction, and second dynamic pressure generating grooves 11₂ ··· possessing dynamic pressure generating parts 13 extending in reverse rotating direction are mixed. In Fig. 10, the junction parts of the fluid lead-in part 12 in each dynamic pressure generating groove 11 and the dynamic pressure generating part 13 is in an arc form. Anyway, the above points (1), (2) and group ratio must be taken into consideration all the same.

In these embodiments, each dynamic pressure generating groove 11 is formed to produce one dynamic pressure generating position, but as shown in Fig. 11, each dynamic pressure generating groove 17 may be formed to produce plural dynamic pressure generating positions.

That is, in the rotary side sealing end face 5a which is the end face of the rotary sealing ring 5, plural dynamic pressure generating grooves 17··· are formed in the peripheral direction as shown in Fig. 11.

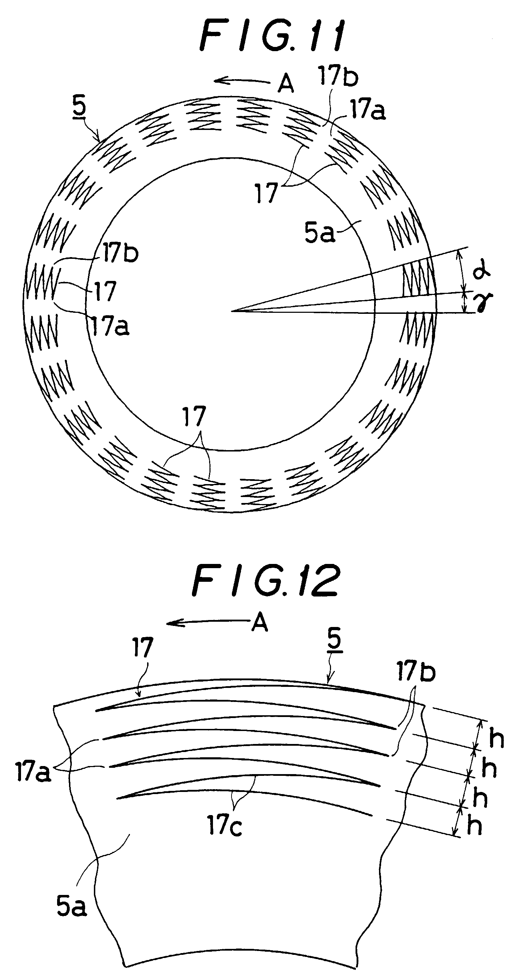

Each dynamic pressure generating groove 17 is in a zigzag form possessing two or more turning points 17a···, 17b··· as shown in Figs. 11 and 12, and is extended in the radial direction from the outer peripheral edge of the high pressure side peripheral edge of the rotary side sealing end face 5a. This dynamic pressure generating groove 17 is a shallow linear groove, which is formed by laser processing, etching processing, shot blast processing or other method. The groove depth D and groove width W of the dynamic pressure generating groove 17 should be preferably D = 1 to 10 µ m, W = 2 mm or less, respectively. The turning points 17a···, 17b··· (including start point and end point of groove 17) are positioned at equal intervals on a straight line passing through the center of the sealing end face 5a, and the range α in the peripheral direction for forming each dynamic pressure generating groove 17, the interval γ between the adjacent cynamic pressure generating grooves 17, and the radial interval : h between the turning points 17a ···, 17b··· are properly set depending on the diameter of the sealing end face 5a and other conditions. In this embodiment, they are set respectively at α = 6.5° , γ = 1° , and h = 1 mm. The linear groove portions 17c··· linking the turning points 17a and 17b (including start point and end point of groove 17) are formed in an arc depending on the diameter of the sealing end face 5a and other conditions as shown in Fig. 12. The number of turning points 17a··· and 17b··· are set properly depending on the radial width and other conditions of the sealing end face 5a. The dam ratio is also set properly depending on the sealing conditions and others, but generally it is about 0.2 to 0.5 in high pressure condition, and about 0.5 to 0.8 in low pressure condition.

In thus composed non-contacting shaft sealing device, when the sealing end faces 3a and 5a are relatively rotated, a dynamic pressure (positive pressure) is always generated between the both sealing end faces 3a and 5a by the dynamic pressure generating grooves 17··· regardless of the rotating direction. That is, when the rotary shaft 2, that is, the rotary side sealing end face 5a rotates in normal rotating direction (direction A), a dynamic pressure is generated at turning points 17a··· at the rotating direction side in each dynamic pressure generating groove 17. When the rotary side sealing end face 5a rotates in reverse rotating direction (anti-direction A), a dynamic pressure is generated at rotating direction side turning points 17b··· (and the end point of the groove).

Therefore, whether the rotary shaft 2 is rotated in normal or reverse direction, a dynamic pressure is generated between the sealing end faces 3a, 5a, and it is balanced with the back pressure acting on the stationary sealing ring 3, that is, the pressure by high pressure side sealed fluid acting on the back side of the holding ring 4 and the thrusting force by the spring 6, and the both sealing end faces 3a and 5a are held in non-contacting state by an interposed fluid film of the fluid to be sealed at high pressure side. At this fluid film forming area, the high pressure side sealed fluid region H and low pressure side sealed fluid region L are favorably separated and sealed.

As mentioned above, when forming zigzag dynamic pressure generating grooves 17 on the sealing end face 5a, various forms can be shaped like when forming approximately L-shaped grooves 11.

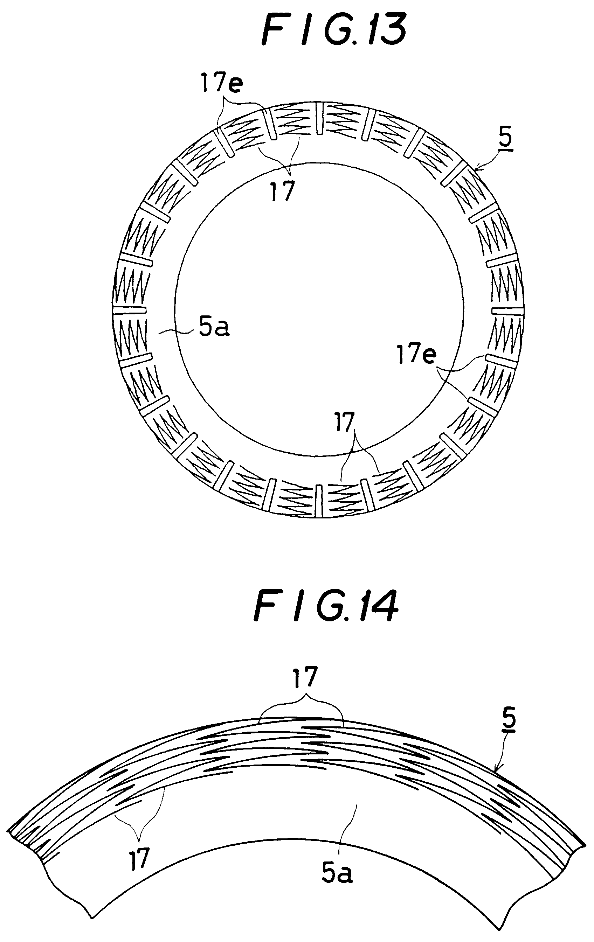

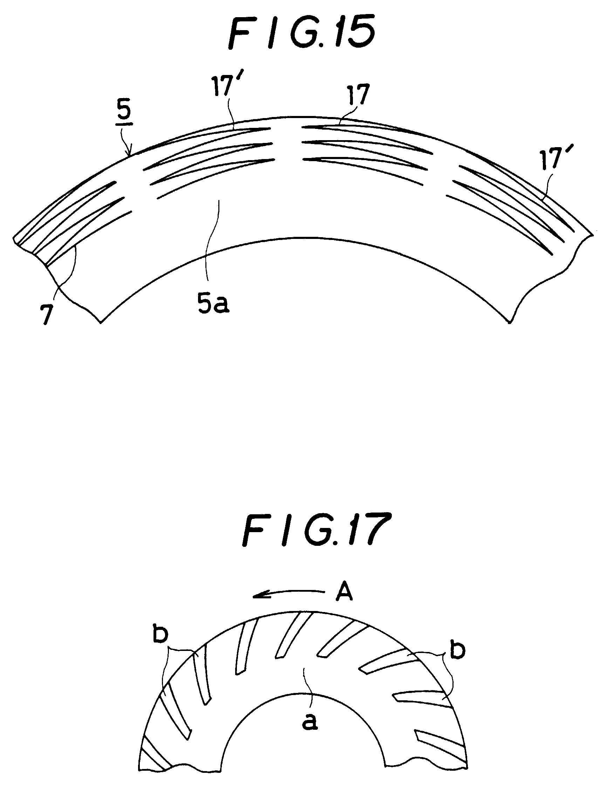

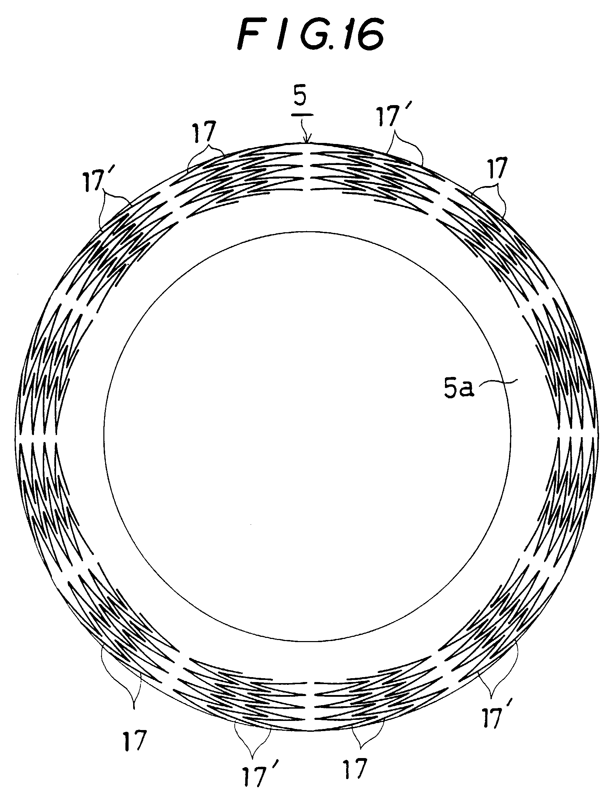

For example, as shown in Fig. 13, a radial groove 17e extending in the direction of the center from the outer peripheral edge of the rotary side sealing end face 5a may be formed between adjacent dynamic pressure generating grooves 17 and 17. Or, as shown in Fig. 14, adjacent dynamic pressure generating grooves 17 and 17 may be partly overlaid in the peripheral direction (for example, dynamic pressure generating grooves 17··· with α = 30° are formed and deviated from each other by 15° in the peripheral direction). Or, as shown in Fig. 15, dynamic pressure generating grooves 17 and 17' symmetrical around the diametral line of the sealing end face 5a may be disposed alternately in the peripheral direction. Furthermore, as shown in Fig. 16, first and second dynamic pressure generating groove groups 17··· and 17'··· symmetrical around the diametral line of the sealing end face 5a may be alternately disposed in the peripheral direction. In this case, each dynamic pressure generating goove group 17···or 17'··· is formed with the adjacent dynamic pressure generating grooves 17 and 17 or 17' and 17' being partially overlaid in the peripheral direction like the one shown in Fig. 14. When constituted as shown in Fig. 15 or Fig. 16, whether rotating normally or reversely, characteristics of the dynamic pressure generation by the dynamic pressure generating groove groups 17··· and 17'··· are identical, and normal and reverse operations are done exactly in the same conditions.

Also in the case shown in Fig. 15 or Fig. 16, like the one shown in Fig.13, radial grooves 17e may be formed between adjacent dynamic pressure generating grooves 17 and 17', or between dynamic pressure generating groove groups 17··· and 17'···. Furthermore, in the cases shown in Figs. 3 through 10, radial grooves 17e may be formed between adjacent dynamic pressure generating groove groups 10₁ and 10₂.

In the foregoing embodiments, since the outside of the annular region where the both sealing end faces 3a, 5a are overlapped is at high pressure, the start end portions of the dynamic pressure generating grooves 11₁, 11₂, 17 and 17' are located in the outer peripheral edge of the sealing end face 5a, but when the inside of the annular region is at high pressure, that is, when the region L in Fig. 1 is high pressure region while region H is low pressure region, the above mentioned start end portions are located in the inner peripheral edge of the sealing end face 5a. More specifically, the fluid lead-in parts 12 of approximately L-shaped dynamic pressure generating grooves 11₁ and 11₂ or zigzag dynamic pressure generating grooves 17 and 17' are formed so as to extend to the outer peripheral side from the inner peripheral edge of the sealing end face 5a. Of course, when forming the radial grooves 17e, these radial grooves 17e are formed so as to extend to the outer peripheral side from the inner peripheral edge of the sealing end face 5a.

Incidentally, the dynamic pressure generating grooves 11₁, 11₂, 17 and 17' can be formed in the stationary side sealing end face 3a. However, when the sealing rings 3 and 5 are combined of soft materials such as carbon and hard materials such as WC, SiC, other ceramics, cemented carbide or other alloy, the grooves are preferably made of hard material.

## Claims

1. A non-contacting shaft sealing device so constructed that a sealing end face (3a) of a seal case side and a sealing end face (5a) of a rotary shaft side may rotate relatively in a non-contacting state with a fluid film of a high pressure side fluid to be sealed interposing therebetween, wherein an even number of dynamic pressure generating groove groups (10) are arranged in the peripheral direction on one sealing end face (3a, 5a), each dynamic pressure generating groove group having plural approximately L-shaped linear dynamic pressure generating grooves (11) each composed of a fluid lead-in part (12) extending in the radial direction from the peripheral edge of said high pressure side of said sealing end face and a dynamic pressuring generating part (13) extending in the peripheral direction from the end portion of said fluid lead-in part with said dynamic pressure generating grooves not crossing each other and being arranged in the radial direction, and adjacent dynamic pressure generating groove groups being symmetrical in the peripheral direction,
characterised in that, the groove ratio in each dynamic pressure generating groove group is 0.1 to 0.9, said groove ratio being the ratio of the radial width of said dynamic pressure generating groove group to the radial width of an annular face where both sealing end faces overlap.

2. A non-contacting shaft sealing device according to claim 1, characterised in that, each dynamic pressure generating groove (11) is a shallow linear groove formed by laser processing, etching processing, or shot blast processing.

3. A non-contacting shaft sealing device according to claim 1, characterised in that, the groove depth of each dynamic pressure generating groove (11) is 0.1 to 20 µm, and the groove width is 0.001 to 3mm.

4. A non-contacting shaft sealing device according to claim 1, characterised in that each dynamic pressure generating groove group (10) has said fluid lead-in parts (12) which are linear and arranged in the peripheral direction and said dynamic pressure generating parts (13) which are in an arc form centred on the centre (O) of the sealing end face and arranged in the radial direction.

5. A non-contacting shaft sealing device according to claim 4, characterised in that in each dynamic pressure generating groove group (10), each fluid lead-in part (12) is inclined at a specific angle (β) with respect to the diametral line of the sealing end face.

6. A non-contacting shaft sealing device according to claim 5, characterised in that, said inclination angle (β) is 0 to 45°.

7. A non-contacting shaft sealing device according to claim 6, characterised in that, in each dynamic pressure generating groove group (10), the inclination direction of each fluid lead-in part (12) is the same as the stretching direction of said dynamic pressure generating groove (13) extending from the end portion of said fluid lead-in part.

8. A non-contacting shaft sealing device according to claim 6, characterised in that in each dynamic pressure generating group (10), the inclination direction of each fluid lead-in part (12) is reverse to the extending direction of the dynamic pressure generating groove (13) from the end of the fluid lead-in part.

9. A non-contacting shaft sealing device according to claim 1, characterised in that a range (a) in the peripheral direction of the sealing end face for forming said dynamic pressure generating groove group (10) is a range of 5° and 30° with respect to the centre (0) of the sealing end face.

10. A non-contacting shaft sealing device according to claim 1, characterised in that, in each dynamic pressure generating groove group (10), said dynamic pressure generating parts (13) of all said dynamic pressure generating grooves are extended in the same direction from said fluid lead-in parts (12).

11. A non-contacting shaft sealing device according to claim 1, characterised in that, each dynamic pressure generating groove group (10) comprises said dynamic pressure generating grooves (11₁), having said dynamic pressure generating parts (13) extended from said fluid lead-in parts (12), in the normal rotating direction of the rotary shaft, and said dynamic pressure generating grooves (11₂) having said dynamic pressure generating parts extended from said fluid lead-in parts (12) in the direction reverse to the normal rotating direction of the rotary shaft.

12. A non-contacting shaft sealing device so constructed that a sealing end face (3a) of a seal case side and a sealing end face (5a) of a rotary shaft side may rotate relatively in a non-contacting state with a fluid film of a high pressure side fluid to be sealed interposing therebetween, wherein plural dynamic pressure generating grooves (17) are formed on one sealing end face (3a, 5a) and arranged in its peripheral direction, and each dynamic pressure generating groove (17) is a shallow linear groove in a zigzag form possessing two or more turning points (17a, 17b) and extending in the radial direction from the high pressure side peripheral edge of the sealing end face, characterised in that;
the groove ratio of each dynamic pressure generating groove is 0.1 to 0.9, said groove ratio being the ratio of the radial width of said dynamic pressure generating groove to the radial width of an annular face where both sealing end faces overlap; and
said adjacent dynamic pressure generating grooves are partly overlaid in the peripheral direction without crossing each other.

13. A non-contacting shaft sealing device according to claim 12, characterised in that radial grooves (17e) extending in the radial direction from the high pressure side peripheral edge of the sealing end face are formed between adjacent dynamic pressure generating grooves (17).

14. A non-contacting shaft sealing device according to claim 12, characterised in that said adjacent dynamic pressure generating grooves (17) are symmetrical around the diametrical line of the sealing end face.

## Patentansprüche

1. Berührungsfreie Wellendichtung in einer Bauweise, daß eine wellenlagerseitige Dichtungsendfläche (3a) und eine wellenseitige Dichtungsendfläche (5a) in dem Maße, wie die Welle gegenüber dem Wellenlager drehbar ist, relativ zueinander berührungsfrei drehbar sind und sich zwischen beiden Dichtungsendflächen ein Hochdruckfluidfilm befindet, wobei eine gerade Anzahl dynamisch Druck erzeugender Nutgruppen (10) in Umfangsrichtung verlaufend in einer Dichtungsendfläche (3a,5a) angeordnet sind, wobei jede Gruppe (10) dynamisch Druck erzeugender Nuten eine Anzahl etwa L-förmiger linearer dynamisch Druck erzeugender Nuten (11) aufweist, von denen jede einen in radialer Richtung zu der Umfangskante der Hochdruckseite der Dichtungsendfläche verlaufenden Fluideinlaßteil (12) und einen dynamisch Druck erzeugenden Teil (13) aufweist, der in Umfangsrichtung vom Ende des in radialer Richtung verlaufenden Fluideinlaßteiles aus, ohne zu kreuzen, verläuft, wobei benachbarte Gruppen dynamisch Druck erzeugender Nuten in Umfangsrichtung symmetrisch aufeinanderfolgen, **dadurch gekennzeichnet, daß** das Nutverhältnis in jeder Gruppe dynamisch Druck erzeugender Nuten 0,1 bis 0,9 beträgt, wobei das Nutverhältnis das Verhältnis der Weite der Gruppe der dynamisch Druck erzeugenden Nuten in radialer Richtung zu der Breite einer Ringfläche in radialer Richtung ist, wo beide Dichtungsendflächen einander übrdecken.

2. Berührungsfreie Wellendichtung nach Anspruch 1,
**dadurch gekennzeichnet, daß** jede dynamisch Druck erzeugende Nut (11) eine schwalbenschwanzförmige Linearnut ist und durch Laserstrahlverfahren, Ätzverfahren oder Druckstrahlverfahren hergestellt ist.

3. Berührungsfreie Wellendichtung nach Anspruch 1,
**dadurch gekennzeichnet, daß** die Nuttiefe jeder dynamisch Druck erzeugenden Nut (11) 0,1 bis 20 /um, die Nutweite 0,001 bis 3mm beträgt.

4. Berührungsfreie Wellendichtung nach Anspruch 1,
**dadurch gekennzeichnet, daß** jede Gruppe (10) dynamisch Druck erzeugender Nuten Fluideinlaßteile (12) aufweist, die linear und in Umfangsrichtung aufeinanderfolgend angeordnet sind, und daß die dynamisch Druck erzeugenden Teile (13) bogenförmig konzentrisch um die Mitte (0) der Dichtungsendfläche und in radialer Richtung aufeinanderfolgend angeordnet sind.

5. Berührungsfreie Wellendichtung nach Anspruch 4,
**dadurch gekennzeichnet, daß** in jeder Gruppe (10) dynamisch Druck erzeugender Nuten jeder Fluideinlaßteil (12) unter einem bestimmten Neigungswinkel (β) schräg zur Durchmesserlinie der Dichtungsendfläche verläuft.

6. Berührungsfreie Wellendichtung nach Anspruch 5,
**dadurch gekennzeichnet, daß** der Neigungswinkel (β) 0 bis 45° beträgt.

7. Berührungsfreie Wellendichtung nach Anspruch 6,
**dadurch gekennzeichnet, daß** in jeder Gruppe (10) dynamisch Druck erzeugender Nuten die Neigungsrichtung jedes Fluideinlaßteils (12) der Erstreckungsrichtung der dynamisch Druck erzeugenden Nut (13) vom Ende des Fluideinlaßteiles aus entspricht.

8. Berührungsfreie Wellendichtung nach Anspruch 6,
**dadurch gekennzeichnet, daß** in jeder Gruppe (10) dynamisch Druck erzeugender Nuten die Neigungsrichtung jedes Fluideinlaßteils (12) entgegengesetzt der Erstreckungsrichtung der dynamisch Druck erzeugenden Nut (13) vom Ende des Fluideinlaßteiles aus ist.

9. Berührungsfreie Wellendichtung nach Anspruch 1,
**dadurch gekennzeichnet, daß** ein Bereich (α) in der Umfangsrichtung der Dichtungsendfläche zur Bildung der Gruppe (10) dynamisch Druck erzeugender Nuten im Bereich zwischen 5 und 30° gegenüber der Mitte (0) der Dichtungsendfläche liegt.

10. Berührungsfreie Wellendichtung nach Anspruch 1,
**dadurch gekennzeichnet, daß** in jeder Gruppe (10) dynamisch Druck erzeugender Nuten die den dynamisch Druck erzeugenden Teile (13) aller dynamisch Druck erzeugender Nuten in gleicher Richtung von den Fluideinlaßteilen (12) aus verlaufen.

11. Berührungsfreie Wellendichtung nach Anspruch 1,
**dadurch gekennzeichnet, daß** jede Gruppe (10) dynamisch Druck erzeugender Nuten die dynamisch Druck erzeugenden Nuten (11₁) mit den dynamisch Druck erzeugenden Teilen (13) in der Erstreckung von den Fluideinlaßteilen (12) ausgehend in der normalen Drehrichtung der drehenden Welle und die dynamisch Druck erzeugenden Nuten (11₂) mit den dynamisch Druck erzeugenden Teilen in der Erstreckung von den Fluideinlaßteilen (12) ausgehend in der Richtung entgegen der Drehrichtung der drehenden Welle aufweist.

12. Berührungsfreie Wellendichtung in einer Bauweise, daß eine gehäuseseitige dichtende Endfläche (3a) und eine drehwellenseitige dichtende Endfläche (5a) berührungsfrei mit einem Hochdruckfluidfilm zwischen sich relativ zueinander drehen, wobei eine Mehrzahl dynamisch Druck erzeugender Nuten (17) in einer dichtenden Endfläche (3a,5a) in deren Umfangsrichtung verlaufend angeordnet sind, wobei die Nuten schwalbenschwanzuförmige Linearnuten in Zick-Zack-Form mit zwei oder mehreren Wendepunkten (17a,17b) sind und sich radial zu der hochdruckseitigen Umfangskante der dichtenden Endfläche erstrecken, **dadurch gekennzeichnet, daß**
das Nutverhältnis bei jeder dynamisch Druck erzeugenden Nut 0,1 bis 0,9 beträgt, wobei dieses Nutverhältnis das Verhältnis von radialer Weite der dynamisch Druck erzeugenden Nut zu radialer Breite einer Ringfläche ist, in deren Bereich zwei Dichtungsendflächen einander überdecken und
die benachbarten dynamisch Druck erzeugenden Nuten teilweise in Umfangsrichtung überlagert sind, ohne zu kreuzen.

13. Berührungsfreie Wellendichtung nach Anspruch 12,
**dadurch gekennzeichnet, daß** sich Radialnuten (17e), die sich radial zu der hochdruckseitigen Umfangskante der Dichtungsendfläche erstrecken, zwischen benachbarten dynamisch Druck erzeugenden Nuten (17) ausgebildet sind.

14. Berührungsfreie Wellendichtung nach Anspruch 12,
**dadurch gekennzeichnet, daß** einander benachbarte dynamisch Druck erzeugende Nuten (17) symmetrisch um die Durchmesserlinie der dichtenden Endfläche angeordnet sind.

## Revendications

1. Un dispositif formant joint d'axe sans contact réalisé de telle manière qu'une face d'extrémité d'étanchéité (3a) d'un côté d'un boîtier de joint et une face d'extrémité d'étanchéité (5a) d'un côté d'un axe rotatif puissent tourner l'une par rapport à l'autre dans un état sans contact avec un film de fluide d'un fluide du côté haute pression devant être rendu étanche s'interposant entre eux, dans lequel un nombre régulier de groupes de rainures de création de pression dynamique (10) sont disposés dans la direction périphérique d'une face d'extrémité d'étanchéité (3a, 5a), chaque groupe de rainures de création de pression dynamique ayant plusieurs rainures de création de pression dynamique qui y sont linéaires et sensiblement en forme de L (11), chacune composée d'une partie d'amenée de fluide (12) s'étendant dans la direction radiale depuis le bord périphérique dudit côté haute pression de ladite face d'extrémité d'étanchéité et une partie de création de pression dynamique (13) s'étendant dans la direction périphérique depuis la partie d'extrémité de ladite partie d'amenée de fluide, lesdites rainures de création de pression dynamique ne se croisant pas les unes les autres et étant disposées dans la direction radiale, et des groupes adjacents de rainures de création de pression dynamique étant symétriques dans la direction périphérique,
caractérisé en ce que le rapport des rainures de chaque groupe de rainures de création de pression dynamique est de 0,1 à 0,9, ledit rapport des rainures étant le rapport de la largeur radiale dudit groupe de rainures de création de pression dynamique sur la largeur radiale d'une face annulaire où les deux faces d'extrémité d'étanchéité se recouvrent.

2. Un dispositif formant joint d'axe sans contact selon la revendication 1, caractérisé en ce que chaque rainure de création de pression dynamique (11) est une rainure linéaire peu profonde formée par traitement au laser, traitement à l'acide, ou traitement au jet de grenailles.

3. Un dispositif formant joint d'axe sans contact selon la revendication 1, caractérisé en ce que la profondeur des rainures de chaque rainure de création de pression dynamique (11) est de 0,1 à 20 µm, et en ce que la largeur des rainures est de 0,001 à 3 mm.

4. Un dispositif formant joint d'axe sans contact selon la revendication 1, caractérisé en ce que chaque groupe de rainures de création de pression dynamique (10) présente lesdites parties d'amenée de fluide (12) qui sont linéaires et disposées dans la direction périphérique et lesdites parties de création de pression dynamique (13) qui sont sous la forme d'un arc centré sur le centre (O) de la face d'extrémité d'étanchéité et disposées dans la direction radiale.

5. Un dispositif formant joint d'axe sans contact selon la revendication 4, caractérisé en ce que, dans chaque groupe de rainures de création de pression dynamique (10), chaque partie d'amenée de fluide (12) est inclinée d'un angle spécifique (β) par rapport à la ligne diamétrale de la face d'extrémité d'étanchéité.

6. Un dispositif formant joint d'axe sans contact selon la revendication 5, caractérisé en ce que ledit angle d'inclinaison (β) est de 0 à 45°.

7. Un dispositif formant joint d'axe sans contact selon la revendication 6, caractérisé en ce que, dans chaque groupe de rainures de création de pression dynamique (10), la direction d'inclinaison de chaque partie d'amenée de fluide (12) est la même que la direction d'allongement de ladite rainure de création de pression dynamique (13) s'étendant depuis la partie d'extrémité de ladite partie d'amenée de fluide.

8. Un dispositif formant joint d'axe sans contact selon la revendication 6, caractérisé en ce que, dans chaque groupe de création de pression dynamique (10), la direction d'inclinaison de chaque partie d'amenée de fluide (12) est inverse à la direction d'extension de la rainure de création de pression dynamique (13) depuis l'extrémité de la partie d'amenée de fluide.

9. Un dispositif formant joint d'axe sans contact selon la revendication 1, caractérisé en ce qu'une gamme (α) dans la direction périphérique de la face d'extrémité d'étanchéité pour former ledit groupe de rainures de création de pression dynamique (10) est une gamme de 5° à 30° par rapport au centre (0) de la face d'extrémité d'étanchéité.

10. Un dispositif formant joint d'axe sans contact selon la revendication 1, caractérisé en ce que, dans chaque groupe de rainures de création de pression dynamique (10), lesdites parties de création de pression dynamique (13) de toutes lesdites rainures de création de pression dynamique sont étendues dans la même direction depuis lesdites parties d'amenée de fluide (12).

11. Un dispositif formant joint d'axe sans contact selon la revendication 1, caractérisé en ce que chaque groupe de rainures de création de pression dynamique (10) comprend lesdites rainures de création de pression dynamique (11₁), ayant lesdites parties de création de pression dynamique (13) étendues depuis lesdites parties d'amenée de fluide (12), dans la direction normale de rotation de l'axe rotatif, et lesdites rainures de création de pression dynamique (11₂) ayant ladite partie de création de pression dynamique étendue depuis lesdites parties d'amenée de fluide (12) dans la direction inverse à la direction normale de rotation de l'axe rotatif.

12. Un dispositif formant joint d'axe sans contact réalisé de telle manière qu'une face d'extrémité d'étanchéité (3a) d'un côté d'un boîtier de joint et une face d'extrémité d'étanchéité (5a) d'un côté d'un axe rotatif puissent tourner l'une par rapport à l'autre dans un état sans contact avec un film de fluide d'un fluide du côté haute pression devant être rendu étanche s'interposant entre eux, dans lequel plusieurs rainures de création de pression dynamique (17) sont formées sur une face d'extrémité d'étanchéité (3a, 5a) et disposées dans sa direction périphérique, et chaque rainure de création de pression dynamique- (17) est une rainure linéaire peu profonde en forme de zigzag présentant au moins deux points de rebroussement (17a, 17b) et s'étendant dans la direction radiale depuis le bord périphérique du côté haute pression de la face d'extrémité d'étanchéité, caractérisé en ce que :
le rapport des rainures de chaque rainure de création de pression dynamique est de 0,1 à 0,9, ledit rapport des rainures étant le rapport de la largeur radiale de ladite rainure de création de pression dynamique sur la largeur radiale d'une face annulaire où les deux faces d'extrémité d'étanchéité se recouvrent ; et
lesdites rainures de création de pression dynamique adjacentes sont en partie recouvertes dans la direction périphérique sans se croiser les unes les autres.

13. Un dispositif formant joint d'axe sans contact selon la revendication 12, caractérisé en ce que des rainures radiales (17e) s'étendant dans la direction radiale à partir du bord périphérique du côté haute pression de la face d'extrémité d'étanchéité sont formées entre des rainures de création de pression dynamique adjacentes (17).

14. Un dispositif formant joint d'axe sans contact selon la revendication 12, caractérisé en ce que lesdites rainures de création de pression dynamique adjacentes (17) sont symétriques autour de la ligne diamétrale de la face d'extrémité d'étanchéité.
